# FASCICULE DE BREVET EUROPEEN

(11) **EP 3 188 119 B1**
(45) Date de publication et mention de la délivrance du brevet: **01.04.2020**
(21) Numéro de dépôt: 17156785.2
(22) Date de dépôt: 30.01.2013
(51) Int. Cl.: G06T 1/20

(54) **PROCÉDÉ DE RECHERCHE DE PIXELS DANS UNE MATRICE ET CIRCUIT METTANT EN OEUVRE LE PROCÉDÉ**
PIXELSUCHVERFAHREN IN EINER MATRIX, UND SCHALTKREIS ZUR UMSETZUNG DIESES VERFAHRENS
METHOD OF SEARCHING FOR PIXELS IN A MATRIX AND CIRCUIT IMPLEMENTING THE METHOD

(30) Priorité: 30.01.2012 FR 1200267
(43) Date de publication de la demande: 05.07.2017
(62) Demande divisionnaire de: 13712826.0
(73) Titulaire: LYNRED, 91120 Palaiseau (FR)
(72) Inventeur: Sanson, Eric, 38000 Grenoble (FR)
(74) Mandataire: Talbot, Alexandre

(56) Documents cités:
- EP-A1- 0 157 141
- EP-A1- 0 349 027
- WO-A1-81/02084
- WO-A1-89/01129
- GB-A- 2 113 949
- US-A- 4 713 535
- US-A1- 2003 209 650
- JAEGER J J ET AL: "A sparse data scan circuit for pixel detector readout", NUCLEAR SCIENCE SYMPOSIUM AND MEDICAL IMAGING CONFERENCE, 1992, ORLANDO, FL, USA 25-31 OCT. 1992, 25 octobre 1992 (1992-10-25), pages 400-402, XP010108510,
- GILBERT A C ET AL: "Group testing and sparse signal recovery", SIGNALS, SYSTEMS AND COMPUTERS, 2008 42ND ASILOMAR CONFERENCE ON, IEEE, PISCATAWAY, NJ, USA, 26 octobre 2008 (2008-10-26), pages 1059-1063, XP031475450,
- CANDES E J ET AL: "An Introduction To Compressive Sampling", IEEE SIGNAL PROCESSING MAGAZINE, IEEE SERVICE CENTER, PISCATAWAY, NJ, US, vol. 25, no. 2, 1 mars 2008 (2008-03-01), pages 21-30, XP011225660,
- ROBERT DORFMAN: "The Detection of Defective Members of Large Populations", ANNALS OF MATHEMATICAL STATISTICS, INSTITUTE OF MATHEMATICAL STATISTICS, BALTIMORE, MD, US, vol. 14, no. 4, 1 décembre 1943 (1943-12-01), pages 436-440, XP009185271, ISSN: 0003-4851, DOI: 10.1214/AOMS/1177731363
- ANDREW STERRETT: "On the Detection of Defective Members of Large Populations", ANNALS OF MATHEMATICAL STATISTICS, INSTITUTE OF MATHEMATICAL STATISTICS, BALTIMORE, MD, US, vol. 28, no. 4, 1 décembre 1957 (1957-12-01), pages 1033-1036, XP009185272, ISSN: 0003-4851, DOI: 10.1214/AOMS/1177706807
- HWANGA F K: "A Method for Detecting all Defective Members in a Population by Group Testing", JOURNAL OF THE AMERICAN STATISTICAL ASSOCIATION, AMERICAN STATISTICAL ASSOCIATION, NEW YORK, US, vol. 67, no. 339, 1 janvier 1972 (1972-01-01), pages 605-608, XP009185273, ISSN: 0162-1459, DOI: 10.1080/01621459.1972.10481257
- PIOTR DUDEK ED - PIOTR DUDEK: "Adaptive sensing and image processing with a general-purpose pixel-parallel sensor/processor array integrated circuit", COMPUTER ARCHITECTURE FOR MACHINE PERCEPTION AND SENSING, 2006. CAMP 2006. INTERNATIONAL WORKSHOP ON, IEEE, 1 septembre 2007 (2007-09-01), pages 1-6, XP031147887,
- A.A Jaeger ET AL: "A sparse data scan circuit for pixel detector readout", IEEE Transactions on Nuclear Science, 1 January 1994 (1994-01-01), pages 632-636, XP55468140, DOI: 10.1109/23.299813 Retrieved from the Internet: URL:https://ieeexplore.ieee.org/stamp/stam p.jsp?arnumber=299813

## Description

### Domaine technique de l'invention

L'invention est relative à un circuit de recherche d'une donnée dans un premier état à l'intérieur d'une matrice comportant des données dans un deuxième état.

L'invention est également relative à un procédé de recherche d'une donnée dans un premier état à l'intérieur d'une matrice comportant des données dans un deuxième état.

### État de la technique

Les dispositifs de détection d'un rayonnement électromagnétique peuvent être utilisés pour l'observation d'une scène et plus particulièrement pour le suivi d'un élément particulier d'une scène. Par exemple, un élément particulièrement lumineux peut être suivi à l'intérieur d'une scène plus sombre.

L'élément lumineux est représenté dans la matrice de pixels du dispositif de détection par un pixel ou un groupe de pixels qui présentent une valeur égale à 0 ou égale à 1 alors que le reste de la scène est dans un état opposé. A titre d'exemple, l'élément lumineux est représenté par un pixel à l'état haut « 1 » alors que le reste de la matrice est à l'état bas « 0 ».

De cette manière, le déplacement de l'élément lumineux est rendu possible en suivant la position du pixel ou du groupe de pixels à l'état haut à l'intérieur de la matrice.

Si l'élément lumineux se déplace rapidement, il est intéressant de déterminer rapidement la position du pixel à l'intérieur de la matrice.

A titre d'exemple, si le détecteur comporte 100000 pixels et que la résolution temporelle du détecteur est égale à 100µs, le débit de données brutes est de un milliard d'informations binaires par seconde. Il est alors nécessaire d'avoir un système de recherche présentant une bande passante importante pour traiter ce flux de données ce qui implique une consommation énergétique importante.

Dans les dispositifs mobiles, il est nécessaire de maîtriser la consommation électrique des différents circuits embarqués. Il en résulte que les données émises par le photodétecteurs doivent être compressées afin d'atteindre un débit raisonnable et limiter la consommation globale de cette partie du dispositif mobile.

De manière conventionnelle, la recherche de pixels atypiques dans une matrice de pixels est réalisée de façon récursive en divisant la matrice M en une pluralité de sous-matrices S1, S2, S3 et S4. La matrice initiale M est divisée en plusieurs sous-matrices S et chaque sous-matrice S est testée afin de déterminer si elle contient ou non un pixel atypique. Quand une sous-matrice S est détectée comme contenant un pixel atypique, cette sous-matrice est considérée être la nouvelle matrice et cette nouvelle matrice est divisée comme précédemment en une pluralité de sous-matrices, par exemple S31, S32, S33, S34. Cette technique permet de déterminer la position d'un pixel atypique dans la matrice, mais au prix d'un procédé extrêmement complexe à mettre en oeuvre et très consommateur en énergie. Un tel mode de mise en œuvre est illustré à la figure 1 et dans le document US2003209650.

La publication de Jeager et al. « A sparse data scan circuit for pixel detector readout » (Nuclear science symposium and medical imaging conférence 1992 Orlando) traite d'un circuit configuré pour rechercher des données pertinentes dans une matrice de capteurs. Le document propose une technique de triple coïncidence reliant la ligne, la colonne et le statut du pixel. Lorsqu'un pixel détecte une particule, la bascule flip-flop de la cellule change d'état ce qui vient fermer un interrupteur SWA qui est connecté à un conducteur de ligne. Un second interrupteur SWB est également activé. Le second interrupteur SWB est connecté à un conducteur de colonne. Au moyen de ces deux interrupteurs, une connexion logique est réalisée entre la ligne et la colonne durant l'opération de balayage des lignes.

Le document EP0157141 traite d'un dispositif de relevé de profil dans un réseau de points-images photosensibles. Chaque ligne de pixels est lue séquentiellement par un moyen de lecture. Ce signal électrique est le résultat de la conversion de variations spatiales de brillance en variations temporelles de courant. Toutes les lignes sont lues simultanément et délivrent M signaux Vj(t) qui évoluent dans le temps. Chaque signal Vj(t) est comparé à un seuil de front montant et à un seuil de front descendant. Le dépassement du seuil entraine la mémorisation de la position i du pixel.

Le document D2 (WO 89/01129) divulgue une matrice de détecteurs est couplée à un détecteur de niveau qui indique la position du maximum d'illumination à l'intérieur de la matrice. La détection est réalisée rangée par rangée simultanément pour tous les détecteur et pour chaque rangée, le détecteur renvoie la position du maximum d'intensité ce qui permet de déterminer rapidement un profil de détection.

### Objet de l'invention

On constate qu'il existe un besoin de prévoir un procédé de recherche de la position d'une donnée dans un premier état à l'intérieur d'une matrice majoritairement composée de données dans un second état.

On tend à combler ce besoin au moyen d'un procédé de recherche qui comporte, dans une matrice de données décomposée en une pluralité de lignes de données munies chacune de nœuds stockant lesdites données :
- réaliser un premier test sur une ligne de données de manière globale afin de déterminer si elle contient une donnée dans le premier état et envoyer un code représentatif de ce test dans un récepteur, le premier test envoyant un premier code lorsque la ligne de données comporte une donnée dans le premier état, et envoyant un deuxième code dans l'autre cas,
- réaliser un deuxième test pour tester individuellement les nœuds de la ligne de données associée à un premier code, le deuxième test envoyant un troisième code lorsque le nœud comporte une donnée dans le premier état et envoyant un quatrième code dans l'autre cas, les résultats du deuxième test étant envoyés dans le récepteur.

On constate également qu'il existe un besoin de prévoir un circuit de recherche qui soit en mesure de déterminer la position d'une donnée dans un premier état à l'intérieur d'une matrice de données majoritairement composée de données dans un second état.

On tend à combler ce besoin au moyen d'un circuit qui comporte :
- la matrice de données organisées selon une pluralité de lignes de données, chaque ligne comportant une pluralité de nœuds de stockage de données, chaque nœud de stockage étant configuré pour stocker un premier état ou un deuxième état, les nœuds de stockage étant majoritairement dans le deuxième état,
- un premier circuit de test de l'état d'une ligne de données, le premier circuit de test étant configuré pour déterminer si la ligne testée est dépourvue de nœud de stockage dans le premier état ou si la ligne testée comporte au moins un nœud de stockage dans le premier état, le premier circuit envoyant un premier code si la ligne comporte au moins un nœud dans un premier état ou un deuxième code si la ligne est dépourvue de nœud de stockage dans le premier état,
- un deuxième circuit de test de l'état des nœuds de stockage dans une ligne de données, le deuxième circuit de test étant configuré pour envoyer un troisième code si le nœud de stockage est dans le premier état ou un quatrième code si le nœud de stockage est dans le deuxième état, le deuxième circuit de test étant configuré pour tester une ligne de données lorsque le premier circuit de test à envoyé un premier code relatif à ladite ligne,
- un récepteur configuré pour recevoir le résultat du premier circuit de test pour chaque ligne testée et pour recevoir le résultat du deuxième circuit de test pour des nœuds de stockage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un procédé de recherche dans un circuit de détection selon l'art antérieur,
- la figure 2 représente, de manière schématique, un circuit de recherche,
- la figure 3 représente, de manière synoptique, un premier mode de fonctionnement d'un circuit selon la figure 2,
- la figure 4 représente, de manière synoptique, un second mode de fonctionnement d'un circuit selon la figure 2,
- la figure 5 représente, de manière schématique, une variante de mise en œuvre d'un circuit de recherche.

### Description de modes de réalisation préférentiels de l'invention

Dans une matrice de données M, par exemple une matrice de pixels, les informations sont organisées selon une pluralité de lignes de données L. La matrice de données M peut représenter l'intégralité d'une matrice initiale ou une partie d'une matrice initiale. De manière avantageuse, les données sont organisées en rangées ou en colonnes.

Une ligne L peut correspondre à une rangée de la matrice M ou à une colonne de la matrice M. Une ligne L peut également correspondre à une partie d'une rangée ou à une partie d'une colonne de la matrice M. Dans encore un autre mode de mise en œuvre une ligne peut correspondre à plus d'une rangée ou plus d'une colonne de la matrice M.

Dans ce cas de figure, une rangée ou une colonne de la matrice ne correspond pas obligatoirement à une ligne L mais à une pluralité de lignes en fonction du découpage réaliser dans la matrice M. A titre d'exemple, une rangée ou une colonne est découpée en deux, trois ou quatre sous-ensembles qui forment chacun une ligne. La matrice de données M peut être découpées selon différents critères afin de l'organiser en une pluralité de lignes de données.

Chaque ligne L comporte une pluralité de nœuds de stockage de données. Un nœud de stockage réalise la conservation de la donnée unitaire à l'intérieur de la matrice. Le nœud de stockage peut être un pixel si la matrice gère des images. Le nœud de stockage contient une information binaire de type 0 ou 1, ou état haut et état bas. De manière plus générale, un premier état ou un second état est stocké dans le nœud de stockage. Le premier état peut être un état haut ou un état bas ou un état 0 ou un état 1. Le second état est différent du premier état.

Afin de déterminer rapidement la position du ou des pixels dans un premier état à l'intérieur d'une matrice de pixels majoritairement dans un second état, il est avantageux d'utiliser un circuit de recherche qui détermine rapidement quel pixel est dans un premier état et quelle position est occupée par ce pixel dans la matrice M. Le terme pixel est utilisé à la place de nœud de stockage afin de faciliter la compréhension d'un tel circuit et d'un tel procédé dans le cas d'une analyse d'image. Cependant, l'homme du métier gardera à l'esprit que ce mode de réalisation peut être généralisé à d'autres domaines techniques pour lesquels, il est intéressant de rechercher des données se trouvant dans un état différent et minoritaire par rapport au reste de la matrice. La matrice M présente un nombre non négligeable de lignes comportant exclusivement des pixels dans le second état.

Par matrice majoritairement dans le second état, on entend une matrice ayant au moins 90% des données dans le second état et 10% des données dans le premier état. Le circuit de recherche est particulièrement intéressant lorsque la matrice comporte moins de 1% de données dans le premier état.

Le circuit de recherche comporte un premier circuit de test 1 de l'état d'une ligne de données L de la matrice M. Le premier circuit de test est configuré pour déterminer si la ligne L testée est dépourvue de nœud de stockage dans le premier état ou si la ligne L testée comporte au moins un nœud de stockage dans le premier état. Le premier circuit de test 1 réalise une analyse de l'intégralité de la ligne de données L sans analyser indépendamment les différents pixels contenus.

Le premier circuit de test 1 envoie un premier code A ou un deuxième code B en fonction du résultat du test. Le premier circuit de test 1 envoie le premier code A si la ligne de données L testée comporte au moins un pixel dans un premier état. Le premier circuit de test 1 envoie le deuxième code B si la ligne L est dépourvue de pixel dans le premier état, c'est-à-dire si la ligne L ne contient que des pixels dans le second état. Le résultat envoyé est codé sur un nombre de bits inférieur aux nombre de nœuds définissant la ligne ce qui implique une compression de l'information. Ainsi, le premier code A et le deuxième code B représentent un nombre de bits inférieur aux nombre de nœuds définissant la ligne. De manière avantageuse, le premier code A et le deuxième code B sont codés sur un bit de manière à avoir une compression maximale sans perte d'information. Si le résultat envoyé est le deuxième code B, la ligne est entièrement définie avec un nombre de bits inférieur au nombre de nœuds définissant la ligne.

De cette manière, un premier test rapide est réalisé ligne par ligne ce qui permet de tester l'intégralité de la matrice M dans une période réduite dans le cas particulier où le nombre de pixels dans le premier état est très faible. De manière avantageuse, la ligne L est une rangée si il existe moins de rangées que de colonnes et inversement la ligne L est une colonne si il existe plus de rangées que de colonnes. De cette manière, le test de l'intégralité de la matrice M est minimal.

De manière avantageuse, les lignes sont testées consécutivement, suivant une séquence connue. A titre d'exemple les lignes sont testées lignes après lignes en suivant une direction Y de test des lignes depuis une extrémité de la matrice M jusqu'à l'extrémité opposée de la matrice M. De cette manière, il n'est pas nécessaire d'assigner un code représentant la position de la ligne L à l'intérieur de la matrice M. La position du premier code A ou du deuxième code B représentatif de l'état de la ligne à l'intérieur du signal compressé transitant dans le circuit de recherche permet de déterminer rapidement la position de la ligne L et son état. D'autres séquences de tests sont possibles, par exemple de manière avantageuse, les premières lignes testées sont choisies dans des zones de la matrice considérées comme prioritaires car elles présentent une plus grande probabilité d'avoir un pixel dans le premier état.

Le circuit de recherche comporte un deuxième circuit de test 2 de l'état des nœuds de stockage dans une ligne de données L. Le deuxième circuit de test 2 est configuré pour tester l'état des pixels à l'intérieur de la ligne de données.

Le deuxième circuit de test 2 est configuré pour envoyer un troisième code C si le pixel est dans le premier état ou un quatrième code D si le pixel est dans le deuxième état.

De manière avantageuse, le deuxième circuit de test 2 est configuré pour tester une ligne de données lorsque le premier circuit de test 1 a envoyé un premier code A relatif à cette ligne L. En effet, afin de gagner du temps et de l'énergie, le résultat du premier test indique si la ligne L contient ou non au moins un pixel dans le premier état.

Si le résultat du premier test indique que la ligne L ne comporte pas de pixel dans le premier état (deuxième code B), il apparaît comme superflu de réaliser un second test plus long qui doit donner le même résultat. En éliminant ce deuxième test, la ligne est caractérisée par un simple code (le code B) indiquant que tous les pixels sont dans le second état.

Dans un mode de réalisation préférentiel, durant le deuxième test, les pixels sont testés consécutivement selon une direction de test X de pixels dans une ligne. Cette particularité permet de ne pas obligatoirement associer un code relatif à la position du pixel dans la ligne avec le code relatif à l'état du pixel. De cette manière, le signal transitant dans le circuit de recherche est fortement compressé et sans perte de données. De manière encore plus préférentielle, la direction de test est identique pour toutes les lignes de la matrice ce qui facilite l'analyse du signal.

Dans un mode de réalisation pouvant être combiné avec les précédents, le deuxième circuit de test 2 analyse toute la ligne de pixels L. Ainsi, le circuit de test 2 envoie un troisième code C ou un quatrième code D associé à chaque pixel de la ligne. Il y a donc autant de troisième et quatrième codes que de pixels dans la ligne de données L. Ce mode de réalisation permet en plus de ne pas utiliser un code supplémentaire pour indiquer la fin de ligne car le circuit de recherche peut comporter une zone mémoire (non représentée) dans laquelle est indiqué le nombre de pixels pour chaque ligne de données L.

Dans une variante du mode de réalisation précédent, le deuxième circuit de test analyse la ligne de pixels jusqu'à ce qu'un pixel soit détecté dans le premier état. Ainsi, le circuit de test envoie un ou plusieurs quatrièmes codes D puis un troisième code C représentatif du premier pixel de la ligne L se trouvant dans le premier état. Ce troisième code C sert également de code pour indiquer que l'information suivante est relative à une autre ligne de données L.

Ce mode de réalisation est particulièrement avantageux lorsque la proportion de pixels dans le premier état est faible, par exemple de l'ordre de quelques unités ou quelques dizaines d'unités par matrice ce qui implique que la probabilité d'avoir deux pixels, d'une même ligne L, dans le premier état est nulle ou quasi-nulle. Ce mode de réalisation affecte peu ou pas un ensemble de pixels adjacents dans le premier état dans une même ligne car un bord de ce motif est détecté ce qui permet de suivre un motif lumineux ou sombre qui occupe plus d'un pixel dans la ligne de données.

Dans un mode de réalisation particulier, il est possible de réaliser la recherche avec ces deux variantes de réalisation décalées dans le temps, afin par exemple, de définir la surface occupée par un ou plusieurs pixels dans le premier état. Un test complet de la ligne peut être réalisé, puis un ou plusieurs tests réduits de la ligne sont réalisables lors des phases d'acquisition suivantes. Cet enchainement peut être réalisé de manière cyclique avec une période prédéfinie.

Le circuit de recherche comporte un dispositif de réception 3 des données envoyées par le premier circuit de test 1 et le deuxième circuit de test 2. Ce dispositif de réception également appelé récepteur 3 est connecté au premier et au deuxième circuits de tests de manière à recevoir le résultat du premier circuit de test 1 pour chaque ligne de données L et pour recevoir le résultat du deuxième circuit de test 2 pour des nœuds de stockage.

Le récepteur contient le signal ou une partie du signal représentatif de l'analyse de la matrice de données M. Ce signal peut être transmis à un circuit de calcul 4 qui analyse l'information représentative de la matrice M. Ce signal est compressé et peut être, selon les modes de réalisation, sans perte de données, c'est-à-dire que tous les pixels ont été caractérisés et qu'il y a association de l'état du pixel avec sa position dans la matrice M.

Le signal généré comporte au moins autant de codes que de lignes analysées. Il peut comporter également une pluralité de codes relatifs à l'analyse complète ou partielle des lignes comportant un pixel dans le premier état.

Le test des lignes de données et des pixels des lignes L peut être réalisé de différentes manières.

Dans un premier mode de réalisation pouvant être combiné avec les modes de réalisation précédents, le premier circuit de test 1 effectue l'analyse de toutes les lignes de données L et cette information est envoyée dans le récepteur 3. Cette première analyse permet de définir une première portion de signal représentant une analyse rapide de la matrice M. Un code représentatif de la fin de cette analyse peut être introduit dans le récepteur 3. Le code peut également être éliminé si le circuit de calcul recevant ce signal connaît le nombre de lignes définissant la matrice M.

Ensuite, le deuxième circuit de test 2 effectue l'analyse des différentes lignes L pour lesquelles un premier code A a été associé afin de former la deuxième portion du signal. Les morceaux du signal représentatifs du test plus précis des différentes lignes L sont ajoutés dans le récepteur 3 dans l'ordre d'apparition de leur ligne L associée dans la première portion du signal afin de faciliter l'analyse.

Dans ce cas de figure, le signal comporte une première portion représentative de l'analyse rapide de la matrice suivie d'une deuxième portion représentative d'une analyse plus précise des différentes lignes possédant un pixel dans le premier état.

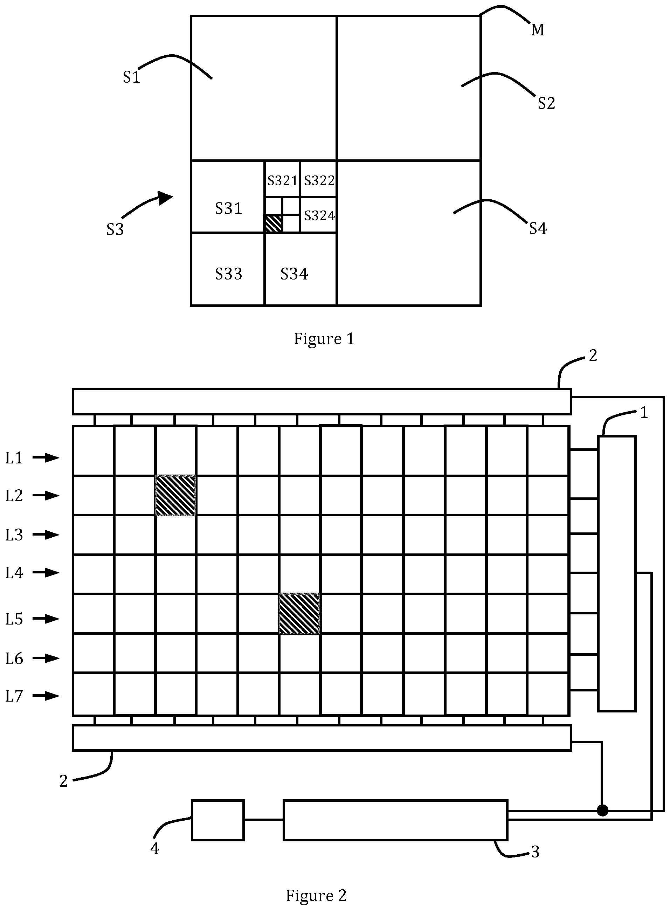

A titre d'exemple, la matrice M illustrée à la figure 2 est analysée pour rechercher les pixels atypiques. Les pixels atypiques sont représentés hachurés dans la matrice M. Durant le premier test, les lignes L sont analysées individuellement et dans leur globalité. La première ligne L1 est dépourvue de pixel dans le premier état, le résultat du test renvoie le code B dans le récepteur 3. La deuxième ligne L2 comporte au moins un pixel dans le premier état, le résultat du test renvoie le code A dans le récepteur 3. Les lignes L3 et L4 sont dépourvues de pixel dans le premier état, le résultat du test renvoie successivement deux codes B dans le récepteur 3. La ligne L5 comporte au moins un pixel dans le premier état, le résultat du test renvoie le code A dans le récepteur 3. Les lignes L6 et L7 sont dépourvues de pixel dans le premier état, le résultat du test renvoie successivement deux codes B dans le récepteur 3.

La première portion du signal définie par le premier test de la matrice, peut d'écrire de la manière suivante : BABBABB.

Le deuxième test est ensuite réalisé. Comme la ligne L1 est dépourvue de pixel atypique, le deuxième test est facultatif. Le deuxième test est réalisé sur la deuxième ligne L2. Les deux premiers pixels sont dans le second état, le deuxième test renvoie successivement deux codes D dans le récepteur 3. Le troisième pixel est dans le premier état, le deuxième test renvoie le code C dans le récepteur 3. Le reste des pixels de la ligne est dans le second état, le deuxième test renvoie ici neuf codes D dans le récepteur 3.

Les lignes L3 et L4 ne sont avantageusement pas testées. La ligne L5 est soumise au deuxième test. Le résultat de ce test se traduit par la présence de cinq codes D représentant les cinq premiers pixels dans le deuxième état, un code C pour le pixel dans le premier état et six codes D pour le reste des pixels de la ligne dans le deuxième état.

Le signal entré dans le récepteur peut donc s'écrire de la manière suivante : BABBABB DDCDDDDDDDDD DDDDDCDDDDDD

Le signal est dépourvu d'espace, ces derniers permettant seulement de mieux comprendre visuellement le découpage du signal entre les différents tests.

Dans une variante de mise en œuvre du précédent mode de réalisation, le premier circuit de test 1 effectue l'analyse de toutes les lignes de données L et le deuxième circuit de test 2 réalise l'analyse de la ligne de données si elle possède un pixel dans le premier état et avant que le premier circuit de test 1 réalise l'analyse de la ligne L suivante.

De cette manière, dans le récepteur, le premier code A représentatif d'une ligne L possédant un pixel dans le premier état est suivi d'un ou plusieurs troisième code C et quatrième code D représentatifs de l'analyse plus précise de la ligne L. Une fois cette analyse terminée, le récepteur comporte le résultat de l'analyse de la ligne suivante par le premier circuit de test avec un premier code A ou un seconde code B.

A titre d'exemple, la matrice M illustrée à la figure 2 est analysée pour rechercher les pixels atypiques. Les pixels atypiques sont représentés hachurés dans la matrice M. Durant le premier test, les lignes L sont analysées individuellement et dans leur globalité. La première ligne L1 est dépourvue de pixel dans le premier état, le résultat du test renvoie le code B dans le récepteur 3. Comme la ligne L1 est dépourvue de pixel atypique, le deuxième test est facultatif. La deuxième ligne L2 comporte au moins un pixel dans le premier état, le résultat du test renvoie le code A dans le récepteur 3.

Le deuxième test est réalisé sur la deuxième ligne L2. Les deux premiers pixels sont dans le second état, le deuxième test renvoie successivement deux codes D dans le récepteur 3. Le troisième pixel est dans le premier état, le deuxième test renvoie le code C dans le récepteur 3. Le reste des pixels de la ligne est dans le second état, le deuxième test renvoie ici neuf codes D dans le récepteur 3.

Le test des deux premières lignes peut s'écrire de la manière suivante : b
BA DDCDDDDDDDDD.

Les lignes L3 et L4 sont dépourvues de pixel dans le premier état, le résultat du test renvoie successivement deux codes B dans le récepteur 3. La ligne L5 comporte au moins un pixel dans le premier état, le résultat du test renvoie le code A dans le récepteur 3. La ligne L5 est soumise au deuxième test. Le résultat de ce test se traduit par la présence de cinq codes D représentant les cinq premiers pixels dans le deuxième état, un code C pour le pixel dans le premier état et six codes D pour le reste des pixels de la ligne dans le deuxième état.

Les lignes L6 et L7 sont dépourvues de pixel dans le premier état, le résultat du test renvoie successivement deux codes B dans le récepteur 3.

Le signal définissant la matrice, peut s'écrire de la manière suivante :
BA DDCDDDDDDDDD BBA DDDDDCDDDDDD BB

Dans le cas d'une analyse partielle de la ligne jusqu'à détecter un premier pixel dans le premier état, le premier mode de mise en œuvre définit le signal suivant :
BABBABB DDC DDDDDC

Le deuxième mode de mise en œuvre définit le signal suivant :
BA DDC BBA DDDDDC BB

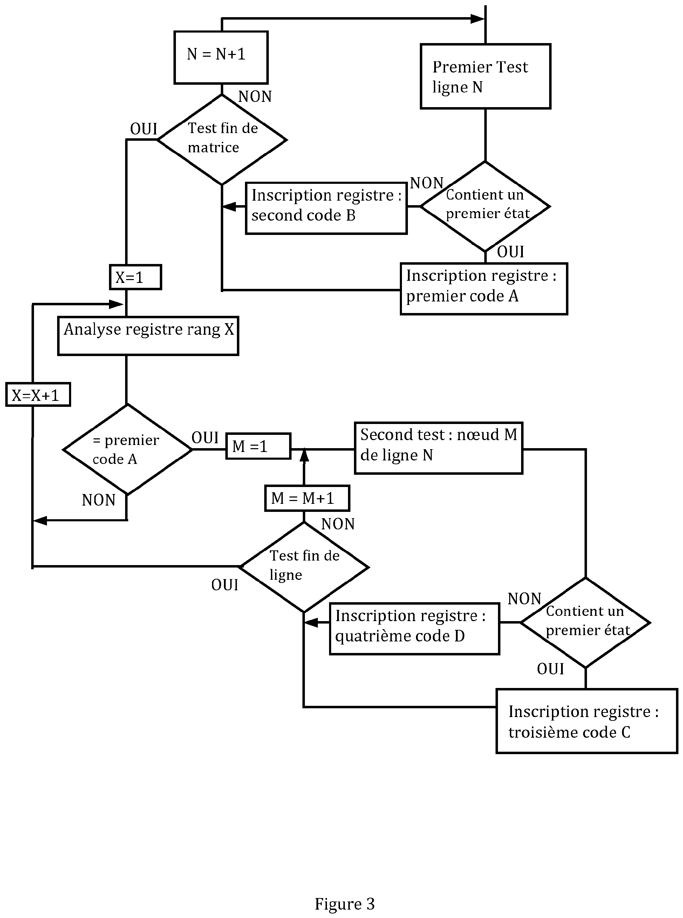

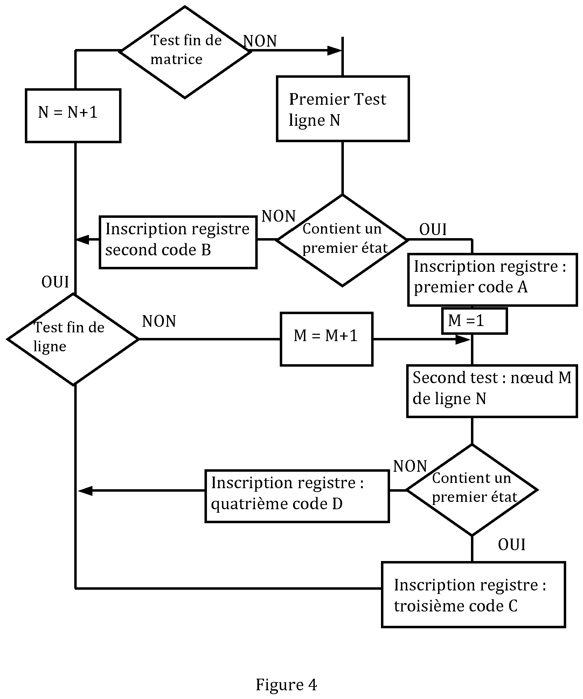

Ces deux modes de fonctionnement du circuit de recherche peuvent être représentés par des schémas synoptiques illustrés aux figures 3 et 4.

Durant une première étape F1 du procédé de recherche, le premier circuit de test 1 vérifie si dans une ligne (une rangée ou une colonne ou une partie de rangée ou colonne d'une matrice initiale), c'est-à-dire dans un premier ensemble de pixels de la matrice M, il existe au moins un pixel qui est dans un premier état, c'est-à-dire dans l'état recherché. Le test est réalisé de manière globale sans rechercher la valeur unitaire de chaque pixel. Le test réalise l'analyse de l'intégralité de la ligne de données, c'est-à-dire de la ligne dans son ensemble.

Le résultat de cette analyse est envoyé dans le récepteur 3.

L'étape F1 est ensuite recommencée pour les autres lignes L de la matrice M et le résultat des différents tests de ligne est enregistré dans le récepteur 3.

L'information présente dans le récepteur est ensuite analysée afin de détecter quelle ligne L comporte un pixel dans le premier état, c'est-à-dire quelle ligne est caractérisée par un premier code A dans le récepteur. Cette analyse permet de choisir les lignes à analyser par le second circuit de test 2. L'information fournit par le premier circuit de test 1 peut également être associée à la ligne ou au deuxième circuit de test 2 afin de déclencher le deuxième test sans passer par l'analyse du récepteur.

Dans une étape F2, le deuxième test est réalisé afin d'analyser les pixels de la ligne caractérisée par le premier code A. Le résultat de cette analyse est envoyé dans le récepteur 3. Le deuxième test permet de réaliser une analyse des différents nœuds de la ligne étudiée. Ce deuxième test est en mesure de discriminer la valeur particulière prise par chaque nœud dans la ligne et de remonter cette information dans le récepteur au moyen d'un code associé.

Comme indiqué plus haut, le test de la ligne peut être complet ou partiel.

Si plusieurs lignes comportent des pixels dans le premier état, l'étape F2 est répétée pour chacune des lignes caractérisées par le premier code A. L'ensemble des données des tests est envoyé dans le récepteur 3.

Par la suite le récepteur peut être transmis au circuit de calcul 4 qui va traiter cette information et il est également possible de modifier la matrice de données M afin de recommencer la recherche. A titre d'exemple, une nouvelle acquisition de données peut être réalisée et ces données sont envoyées dans la matrice M afin de rechercher de nouvelles données dans le premier état.

Dans une variante de réalisation illustrée schématiquement à la figure 4, durant une première étape F1 du procédé de recherche, le premier circuit de test 1 vérifie si dans une ligne (une rangée ou une colonne ou une partie de rangée ou de colonne d'une matrice initiale), c'est-à-dire dans un premier ensemble de pixels de la matrice M, il existe au moins un pixel qui est dans un premier état, c'est-à-dire dans l'état recherché.

Le résultat de cette analyse est envoyé dans le récepteur 3.

Le récepteur est ensuite analysé afin de détecter si la ligne venant d'être testée comporte un pixel dans le premier état. Si le résultat du test est le premier code A, la ligne comporte au moins un pixel dans le premier état et le second test de l'étape F2 est déclenché. Si le résultat du premier test est un second code B, la ligne est dépourvue de pixel dans le premier état et l'étape F1 est réalisée sur la ligne de données suivante.

Le déclenchement de l'étape F2 peut être réalisé avec l'analyse du récepteur 3 ou en connectant le premier circuit de test 1 au second circuit de test 2 de sorte que l'émission d'un premier code A en sortie du premier circuit de test déclenche l'analyse de la ligne L par le second circuit de test 2. D'autres moyens de mise en œuvre de cette succession de tests sont possibles.

Dans une étape F2, le second test est réalisé afin d'analyser les pixels de la ligne 2 caractérisée par le premier code A. Le résultat de cette analyse est envoyé dans le récepteur 3. Comme indiqué plus haut, le test de la ligne peut être complet ou partiel.

L'étape F1 est ensuite recommencée pour la ligne suivante de la matrice.

Par la suite le récepteur peut être transmis à un circuit de calcul 4 qui va traiter cette information et il est également possible de modifier la matrice de données afin de recommencer la recherche. A titre d'exemple, une nouvelle acquisition de données peut être réalisée et ces données sont envoyées dans la matrice afin de rechercher de nouveaux pixels dans le premier état.

Dans un mode de réalisation particulier, l'intégralité des pixels de la ligne est testée et le résultat de ce test est écrit dans le récepteur. De cette manière, lorsqu'un premier code A est écrit dans le récepteur, il est suivi par une suite de troisième C code et de quatrième code D. Le nombre de troisième C et quatrième D codes mis en série est égal au nombre de pixels présents dans la ligne étudiée. Ainsi, bien que la taille du signal varie dans le temps en fonction du nombre de pixels dans le premier état, le circuit de calcul analyse ces informations sans avoir besoin de codes supplémentaires indiquant une fin de ligne.

La recherche du ou des pixels dans le premier état peut être réalisée par toute technique adaptée.

A titre d'exemple, dans le cas où le nombre de pixels dans une ligne est constant dans la matrice, il est possible de faire la somme des informations stockées dans une ligne et de comparer cette valeur à une valeur représentative du résultat attendu, par exemple N*0 si la ligne comporte N pixels. Ce résultat peut être obtenu en comparant chaque pixel à une valeur seuil et en incrémentant un récepteur en fonction du résultat de la comparaison.

Dans le cas où le nombre de pixels dans une ligne varie entre les lignes ou lorsque cette information n'est pas remontée au circuit de recherche, il est possible de faire la somme ou le produit des valeurs des différents pixels d'une ligne. Le choix de l'opérateur mathématique est choisi en fonction de l'information recherchée.

Le test de la ligne peut être réalisé au moyen d'un opérateur de type OU ou d'un opérateur de type ET.

Si le premier état est un niveau 1, on peut utiliser une addition des différents pixels (opérateur OU) afin de détecter au moins un pixel à l'état 1 dans une ligne de pixels à l'état 0. Si le premier état est un niveau 0, on peut utiliser une multiplication des différents pixels (opérateur ET) afin de détecter au moins un pixel à l'état 0 dans une ligne de pixels à l'état 1.

De manière avantageuse, le premier code A et le deuxième code B sont codés sur un bit afin de définir simplement l'état d'une ligne de données et obtenir un maximum de compression. Le premier code A est différent du deuxième code B.

De manière avantageuse, le troisième code C et le quatrième code D sont codés sur un bit afin de définir simplement l'état du pixel et obtenir le maximum de compression. Le troisième code C est différent du quatrième code D.

De manière avantageuse, lorsque le récepteur stocke des informations de manière binaire, le premier code A est identique au troisième code C et le deuxième code B est identique au quatrième code D.

Dans le cas présent, à titre d'exemple, le code « 1 » représente le premier code A et le troisième code C. Le code « 1 » indique que la ligne comporte un pixel dans le premier état ou que le pixel testé est dans le premier état. Cette différentiation est réalisée par le circuit d'analyse en fonction de la position de ce code à l'intérieur du récepteur. De la même manière, le code « 0 » représente le deuxième code B et le quatrième code D. Le code « 0 » indique que la ligne est dépourvue de pixel dans le premier état et que le pixel est dans le second état. Cependant, il est également possible d'avoir un premier code A est identique au quatrième code D et le deuxième code B est identique au troisième code C. Le circuit de recherche est alors légèrement modifié par exemple en utilisant un inverseur supplémentaire.

Dans le mode de réalisation avec analyse partielle de la ligne, les occurrences impaires de codes « 1 » sont relatives aux lignes comportant des pixels dans le premier état. Les occurrences paires de codes « 1 » sont représentatives du pixel dans le premier état à l'intérieur de la ligne. Dans ce mode de réalisation, comme on considère qu'une ligne ne peut pas avoir deux pixels dans le premier état. Le premier code « 1 » (ou les occurrences impaires) indique que la ligne présente un pixel dans le premier état. Le deuxième code « 1 » (ou les occurrences paires) indique la position du pixel dans la ligne et signifie également que l'analyse de la ligne est terminée. Ainsi, le prochain code « 1 » (occurrence impaire) est relatif à une autre ligne.

De cette manière, il est possible de manière simple et rapide d'identifier les pixels dans le premier état à l'intérieur de la matrice de pixels et de donner facilement leur position. Le signal représentant la matrice est très compressé et plus facile à mettre en œuvre que les enseignements de l'art antérieur.

Dans une variante de réalisation, une rangée (ou une colonne) de données est décomposée en une pluralité de lignes. Par exemple, la rangée de données comporte trois lignes. Durant le premier test, les lignes sont analysées afin de déterminer quelle ligne possède un pixel dans le premier état et quelle ligne en est dépourvue.

Selon le résultat de ce premier test, les lignes sont analysées ou non avec le second test afin de déterminer la position des pixels dans le premier état.

Dans un mode de mise en œuvre particulièrement avantageux, les données du premier test et du second test sont interlacées pour faciliter l'intégration de ce mode de réalisation dans un circuit ayant une architecture simple.

Dans le cas particulier où le circuit est configuré pour lire une ligne représentant une partie de rangée ou une partie de colonne d'une matrice initiale (ici une partie de rangée), une rangée ou une colonne de la matrice initiale correspond à plusieurs lignes de la matrice M.

A titre d'exemple, le circuit peut être configuré pour découper une rangée de la matrice initiale en trois sous-rangées, chaque sous-rangée correspond à une ligne de la matrice M. Le signal défini après analyse de la matrice illustrée à la figure 2 est le suivant :
BBB ABB DDCD BBB BBB BAB DCDD BBB BBB

La première suite de trois deuxièmes codes (BBB) correspond à l'analyse des trois premières lignes formant la première rangée. La deuxième suite de trois codes, un premier code A suivi de deux deuxième codes B (ABB) correspond à l'analyse des trois lignes formant la deuxième rangée. Cet ensemble de trois codes indique qu'un pixel dans le premier état se trouve dans la première ligne de la deuxième rangée et qu'aucun pixel dans le premier état n'est présent dans le reste de cette deuxième rangée.

Une suite de quatre codes (DDCD) est ensuite générée pour caractériser plus finement la ligne identifiée par le premier code A. Chaque code correspond à une donnée, par exemple un pixel. Cette suite de quatre codes indique que le pixel dans le premier état se trouve en troisième position dans la ligne. La suite de quatre codes est suivie d'une nouvelle suite de trois codes caractérisant la rangée suivante. Le reste de l'analyse de la matrice est réalisé de la même manière que précédemment. Dans le cas présent, chaque suite de trois codes contenant le premier code A est suivie, avantageusement immédiatement, par une suite de quatre codes C et D contenant au moins une fois le troisième code C.

Dans le cas où plusieurs lignes d'une même suite de trois codes sont représentées par le premier code A, il y a plusieurs séries de quatre codes C et D à la suite les uns des autres pour l'analyse plus fine de ces différentes lignes. La première suite de quatre codes correspond à la ligne représentée par la première occurrence du premier code A et les suites suivantes de quatre codes correspondent aux occurrences suivantes.

Dans ce mode de réalisation, la rangée ou la colonne est analysée une première fois au moyen des différentes lignes. Une fois l'analyse de la rangée ou de la colonne réalisée, une analyse plus fine de la ligne associée ou des lignes associées au premier code est effectuée. L'analyse de la rangée ou de la ligne suivante est ensuite réalisée.

Dans un autre mode de mise en œuvre, l'analyse de la ligne est réalisée immédiatement après l'occurrence du premier code A ce qui se rapproche du mode de réalisation illustré à la figure 4. Dans un autre mode de réalisation, toutes les lignes sont analysées et il y a ensuite analyse plus précise des différentes lignes associées au premier code A.

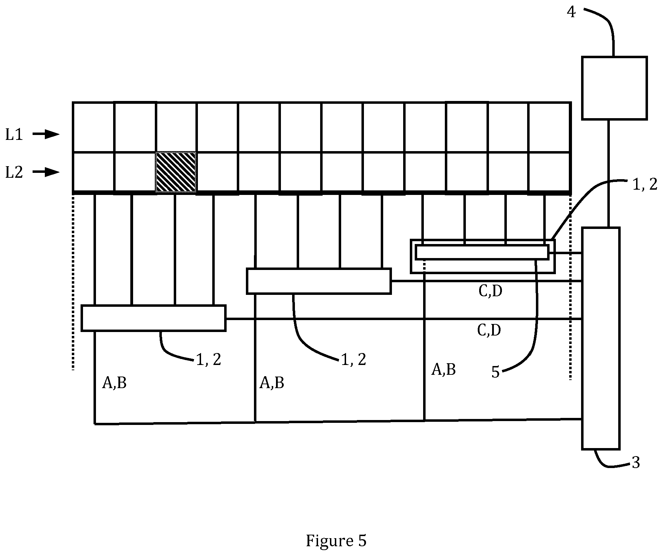

Le test d'une partie d'une rangée ou d'un colonne en tant que ligne peut être réalisé simplement comme cela est illustré à la figure 5. Le circuit de recherche comporte un dispositif de réception 3 des données envoyées par une pluralité de premiers circuits de test 1 et de deuxièmes circuits de test 2. Ce dispositif de réception également appelé récepteur 3 est connecté aux premiers et au deuxièmes circuits de test de manière à recevoir le résultat des premiers circuits de test 1 pour chaque ligne de données L qui constitue une rangée ou une colonne et pour recevoir le résultat du deuxième circuit de test 2 pour des nœuds de stockage.

Plusieurs nœuds de stockage sont connectés à un même premier circuit de test 1 de manière à former une ligne. En d'autres termes, une rangée ou une colonne est décomposée en une pluralité de groupes de nœuds de stockage, chaque groupe étant associé à son propre premier circuit de test 1.

Chaque ligne comporte également son propre deuxième circuit de test de manière à ressortir une information plus précise de la ligne lorsqu'elle est associée à un premier code A.

Dans le mode de réalisation avantageux illustré à la figure 5, le premier et le deuxième circuits de test sont formés à l'intérieur d'un même circuit et ils partagent certains éléments, par exemple un récepteur élémentaire 5. Le circuit général est noté 1,2. Il comporte par exemple deux lignes de sortie. Une première ligne de sortie associée au premier circuit de test pour sortir un premier ou un deuxième code. Il possède une deuxième ligne de sortie associée au deuxième circuit de test pour sortir une pluralité de troisièmes ou quatrièmes codes. De manière particulièrement avantageuse, les premiers circuits de test comportent un récepteur élémentaire qui reçoit l'information des différents nœuds de stockage de la ligne associée. Cette information est traitée de manière à fournir le premier code A ou le deuxième code B sur une ligne de sortie reliée au récepteur. Ce récepteur du premier circuit de test est également associé au deuxième circuit de test de manière à ressortir facilement la caractérisation de la ligne associée à un premier code A.

Ce mode de réalisation permet d'analyser facilement la matrice en fournissant une compression importante et en évitant d'utiliser des mémoires de trame ou de ligne.

Dans un mode de réalisation particulier illustré dans l'exemple précédent, l'analyse plus précise des lignes peut être réalisée de manière séquentielle après chaque analyse d'un groupe de lignes, si nécessaire. Dans le cas illustré par l'exemple précédent une analyse fine par le deuxième test est effectuée après une analyse de trois lignes par un premier test ce qui permet de réaliser une analyse complète de chaque rangée. Un autre cycle peut être réalisé entre la fréquence du premier test et la fréquence du deuxième test, c'est à dire que l'information plus précise d'une ligne peut être placée juste après l'information générale sur la ligne. Il est encore possible d'analyser une pluralité de lignes, par exemple six lignes et de placer les éventuelles analyses plus précises de ces lignes à la suite.

Dans cette configuration, le second circuit de test est configuré pour tester une ligne de données ou un groupe de lignes associées à un premier code A et envoyer le résultat de ce test dans le récepteur avant que le premier circuit de test réalise le test de la ligne suivante ou du groupe de lignes suivant.

Dans un mode de réalisation particulier également illustré dans l'exemple précédent, plusieurs lignes sont analysées simultanément, chacune par leur premier circuit de test associé. Cette configuration permet d'augmenter le débit du circuit de recherche en réalisant plusieurs analyses en parallèle. Dans un mode de mise en œuvre particulier, ce procédé d'analyse est utilisé dans une matrice de photodétecteurs. Les photodétecteurs observent une scène et le résultat de cette observation est enregistré dans un nœud de rétention associé à chaque photodétecteur. Ainsi, la scène observée est enregistrée et retranscrite par une information stockée dans les différents nœuds de rétention. Lorsque les photodétecteurs observent la scène de manière répétitive, l'analyse de la scène est réalisée de préférence entre deux acquisitions afin de suivre l'évolution de la scène observée.

Dans les exemples ci-dessus, les rangées de pixel ont été découpées en série de trois lignes, chaque ligne comportant quatre pixels. Le découpage de la matrice aurait put être réalisé en colonne. Les rangées ou les colonnes auraient put être décomposées en une pluralité de lignes, chaque ligne comportant un nombre prédéfini de pixels.

Il est possible de détecter des zones plus lumineuses ou plus sombres de la scène en utilisant le procédé de recherche décrit plus haut sur les différentes lignes de données et de suivre leurs déplacements dans une scène en réalisant plusieurs acquisitions. La scène observée est analysée au moyen de la matrice de pixels.

Si l'information donnée par les photodétecteurs est de type analogique, il est avantageux de réaliser une étape de comparaison de la donnée fournie par le photodétecteur à un seuil afin de stocker une information binaire représentative de cette comparaison dans les nœuds de stockage.

Si l'information stockée dans les nœuds de stockage est analogique, il est avantageux de réaliser une comparaison par rapport à un seuil et d'utiliser le résultat de cette comparaison afin de réaliser l'étape F1 d'analyse de la ligne. Dans un mode de réalisation particulier, la matrice de données fait partie d'un dispositif de détection. La matrice de données est une matrice de pixels où chaque pixel est associé à un photodétecteur.

Le dispositif de détection comporte une pluralité de photodétecteurs capables de convertir le signal lumineux reçu en un signal électrique. Le photodétecteur est configuré pour détecter un rayonnement électromagnétique dans une gamme précise de longueur d'ondes.

Le photodétecteur peut être formé par tout dispositif adapté, par exemple par une photodiode ou par un dispositif à puits quantique ou à multi-puits quantiques. Le photodétecteur est avantageusement configuré pour détecter un rayonnement visible ou infrarouge, de préférence, une gamme particulière du rayonnement infrarouge, par exemple les gammes, LWIR, MWIR ou SWIR.

Le dispositif de détection comporte également des circuits de polarisation du photodétecteur. Le circuit de polarisation est configuré de manière à ce que le photodétecteur 1 agisse comme une source de courant dont l'intensité du courant est fonction du rayonnement électromagnétique reçu. Le photodétecteur est relié à un circuit qui intègre ou stocke le signal émis par le photodétecteur. Si le circuit de lecture comporte un condensateur d'intégration ce denier peut également servir pour définir le nœud de stockage. Il est également possible que le signal présent dans le circuit de lecture soit envoyé dans le nœud de stockage formé par un autre dispositif électronique.

Afin de rechercher un niveau « 0 », il est avantageux de réaliser un test OU sur les nœuds d'une même ligne. De cette manière, le résultat attendu est 0 et la présence d'un résultat final égal à 1 entraîne une analyse plus précise de la rangée ou de la colonne.

A titre d'exemple, un tel mode de réalisation peut être mis en œuvre en utilisant une ligne de polarisation commune à la ligne de pixels et un bus de données commun à cette même ligne de pixels. La ligne de polarisation est reliée au bus de données par une pluralité d'interrupteurs montés en parallèle. Chaque pixel est relié à l'électrode de commande de son transistor associé. De cette manière, si tous les pixels sont dans le deuxième état, tous les interrupteurs sont à l'état bloquant et l'information de la ligne de polarisation n'est pas transmise sur le bus de données. Dans le cas où un pixel se trouve dans le premier état, l'information de la ligne de polarisation est envoyée dans le bus de données.

L'interrupteur peut être formé par un transistor dont le type de conductivité (par exemple NMOS ou PMOS) est choisi en fonction du niveau de l'état recherché.

Il est également possible de réaliser un test ET sur les circuits de détection d'une même rangée ou colonne. De cette manière, le résultat attendu est 1 et la présence d'un résultat final égal à 0 entraîne une analyse plus précise de la rangée ou de la colonne.

A titre d'exemple, un tel mode de réalisation peut être mis en œuvre en utilisant une ligne de polarisation commune à la ligne de pixel et un bus de données commun à cette même ligne de pixels. La ligne de polarisation est reliée au bus de données par une pluralité d'interrupteurs montés en série. Le montage série des différents interrupteurs permet de relier la ligne de polarisation au bus de données. Chaque pixel est relié à l'électrode de commande de son interrupteur associé. De cette manière, si au moins un interrupteur est dans le deuxième état, l'information de la ligne de polarisation n'est pas transmise sur le bus de donnée. Dans le cas où tous les pixels se trouvent dans le second état, l'information de la ligne de polarisation est envoyée dans le bus de données.

Là encore, en changeant le type de conductivité des différents transistors formant les interrupteurs, il est possible de tester l'état opposé des pixels.

De manière avantageuse, un test selon la configuration OU est utilisé car il permet de connecter la ligne de polarisation au bus de donnée de manière indépendante pour chaque transistor. Ainsi, le même circuit peut réaliser le second test en envoyant successivement sur le bus l'état de chaque pixel au moyen de son transistor associé. Un deuxième interrupteur peut être monté en série avec l'interrupteur précédent afin de définir si le premier test ou le second test est à effectuer. Le même bus de données sert à ressortir l'information de la ligne et de chaque pixel.

Dans ce mode de mise en œuvre avec un seul bus, le codage est réalisé sur un bit.

De manière préférentielle, la ligne de polarisation est commune pour toute la matrice.

De manière avantageuse, les circuits de lecture sont organisés selon une première direction d'organisation qui définit une rangée ou une colonne de circuits. De cette manière, le dispositif de détection comporte plusieurs rangées ou plusieurs colonnes de circuits de lecture. De manière préférentielle, les nœuds de stockage sont organisés en matrice c'est-à-dire en rangée et en colonne.

Apres une étape d'observation d'une scène choisie, les circuits stockent une information représentative de cette scène. Une phase d'analyse de la scène est ensuite réalisée.

Comme illustré à la figure 2, le dispositif de détection peut faire partie d'un dispositif de guidage d'un élément mobile. Dans ce dispositif de guidage, la position du pixel dans le premier état est déterminée dans la matrice de photodétecteurs. Cette position est envoyée dans un circuit de calcul 4 qui traite cette information et envoie un ou plusieurs signaux au système 6 de propulsion et/ou de direction de l'élément mobile.

De manière avantageuse, le circuit de calcul envoie des signaux configurés de manière à rapprocher ledit au moins un pixel dans une position préférentielle de la matrice de photodétecteurs lors de la prochaine phase d'acquisition. De manière avantageuse, le circuit de calcul envoie des signaux configurés de manière à ce que l'élément mobile soit déplacé pour positionner le pixel dans le premier état, par exemple, au milieu de la matrice lors de la prochaine phase d'acquisition.

Le circuit de recherche peut également être utilisé afin de tester la fonctionnalité du dispositif de détection face à une mire étalonnée ce qui permet de détecter rapidement les circuits de lecture non fonctionnels ou atypiques. La matrice de photodétecteur réalise l'acquisition de la mire étalonnée pendant une durée plus ou moins importante. Les pixels sont alors testés afin de rechercher ceux qui présentent une luminosité plus importante ou moins importante qu'un seuil.

## Revendications

1. Circuit de recherche d'information dans une matrice de données (M) comportant :
- la matrice de données (M) organisées selon une pluralité de lignes de données (L), chaque ligne de données (L) comportant une pluralité de nœuds de stockage de données, chaque nœud de stockage de données étant configuré pour stocker un premier état ou un deuxième état, les nœuds de stockage de données étant majoritairement dans le deuxième état,
- un premier circuit (1) réalisant un premier test de l'état d'une ligne de données (L), le premier circuit (1) étant configuré pour déterminer si la ligne de données (L) testée est dépourvue de nœud de stockage de données dans le premier état ou si la ligne de données (L) testée comporte au moins un nœud de stockage de données dans le premier état, le premier circuit (1) envoyant un premier code (A) si la ligne de données (L) comporte au moins un nœud de stockage de données dans un premier état ou un deuxième code (B) si la ligne de données (L) est dépourvue de nœud de stockage de données dans le premier état,
- un deuxième circuit (2) réalisant un deuxième de test de l'état des nœuds de stockage dans une ligne (L) de données, le deuxième circuit (2) étant configuré pour envoyer un troisième code (C) si le nœud de stockage de données est dans le premier état ou un quatrième code (D) si le nœud de stockage de données est dans le deuxième état, le deuxième circuit (2) étant configuré pour tester une ligne de données (L) lorsque le premier circuit (1) a envoyé un premier code (A) relatif à ladite ligne de données (L),
- un récepteur (3) configuré pour contenir un signal représentatif de l'analyse de la matrice de données (M),
**caractérisé en ce que** :
- le premier circuit (1) teste toutes les lignes de données (L) de la matrice de données (M) selon une séquence prédéfinie,
- le deuxième circuit (2) est configuré pour tester consécutivement tous les nœuds de stockage de ladite ligne de données (L) et émettre un troisième code (C) ou un quatrième code (D) selon que le nœud de stockage analysé est ou non dans le premier état lorsque le premier circuit (1) a envoyé un premier code (A) relatif à ladite ligne de données (L), le deuxième circuit (2) étant configuré pour tester consécutivement tous les nœuds de stockage de ladite ligne de données (L) au moins jusqu'à l'occurrence d'un troisième code (C),
- le récepteur (3) reçoit le résultat du premier circuit de test (1) pour chacune des lignes de données (L) de la matrice de données et reçoit le résultat du deuxième circuit de test (2) pour tous les nœuds de stockage testés de manière à ce que le récepteur (3) contienne un signal qui comporte autant de premier et deuxième codes que de lignes de données (L) analysées, le signal comportant une succession de premier, deuxième, troisième et quatrième codes.

2. Circuit selon la revendication 1, **caractérisé en ce que** le premier code (A), le deuxième code (B), le troisième code (C) et le quatrième code (D) sont codés sur un bit.

3. Circuit selon l'une des revendications 1 et 2, **caractérisé en ce que** la matrice de données (M) est une matrice de photodétecteurs associée à une matrice de circuits de lecture, chaque circuit de lecture comporte un nœud d'intégration de l'information émise par le photodétecteur associé, le nœud d'intégration formant le nœud de stockage de données.

4. Circuit selon la revendication 3, **caractérisé en ce que** chaque ligne de données (L) de la matrice de données (M) correspond à une ligne de nœuds d'intégration de la matrice de photodétecteurs, le premier circuit (1) est configuré pour tester successivement des lignes de nœuds d'intégration de la matrice de photodétecteurs et envoyer, dans le récepteur (3), un premier ou deuxième code (A, B) représentatif de chaque premier test.

5. Circuit selon la revendication 3, **caractérisé en ce que** chaque ligne de données (L) de la matrice de données (M) correspond à une pluralité de lignes de nœuds d'intégration de la matrice de photodétecteurs, le premier circuit de test (1) est configuré pour tester successivement une pluralité lignes de nœuds d'intégration de la matrice de photodétecteurs et envoyer, dans le récepteur (3), un premier ou deuxième code (A, B) représentatif de chaque premier test.

6. Circuit selon l'une des revendications 4 et 5, **caractérisé en ce que** le second circuit (2) est configuré pour tester une ligne de données (L) associée à un premier code (A) et envoyer le résultat de ce deuxième test dans le récepteur (3) avant que le premier circuit (1) réalise le test de la ligne de données (L) suivante.

7. Circuit selon l'une quelconque des revendications 4 à 6, **caractérisé en ce que** le second circuit (2) est configuré pour tester tous les nœuds de stockage de la ligne de données (L) dans une première direction de test.

8. Circuit selon l'une quelconque des revendications 4 à 6, **caractérisé en ce que** le second circuit (2) est configuré pour tester tous les nœuds de stockage de la ligne de données (L) dans une première direction de test jusqu'à tester un nœud de stockage dans le premier état (A).

9. Circuit selon l'une quelconque des revendications 1 à 8, **caractérisé en ce que** le premier circuit (1) comporte une ligne de polarisation, un bus de données représentatif du résultat du premier test, une pluralité d'interrupteurs montés en parallèle et connectés chacun à la ligne de polarisation et au bus de données, l'électrode de commande de chaque interrupteur étant couplée au nœud de stockage associé de manière à commander l'état de l'interrupteur.

10. Elément mobile comportant :
- un circuit de recherche d'information selon l'une des revendications 3 à 9,
- un système de propulsion et/ou de rotation de l'élément mobile
- un circuit de calcul connecté au récepteur (3) et configuré pour rechercher la position d'au moins un pixels dans le premier état et pour actionner le système de propulsion et/ou de direction de manière à rapprocher ledit au moins un pixel dans une position préférentielle de la matrice de photodétecteurs lors de la prochaine phase d'acquisition.

11. Procédé de recherche d'information dans une matrice de données (M) comportant :
- la matrice de données (M) organisées selon une pluralité de lignes de données (L), chaque ligne de données (L) comportant une pluralité de nœuds de stockage de données, chaque nœud de stockage de données étant configuré pour stocker un premier état ou un deuxième état, les nœuds de stockage de données étant majoritairement dans le deuxième état,
- un premier test de l'état d'une ligne de données (L), le premier test étant configuré pour déterminer si la ligne de données (L) testée est dépourvue de nœud de stockage de données dans le premier état ou si la ligne de données (L) testée comporte au moins un nœud de stockage de données dans le premier état, le premier test envoyant un premier code (A) si la ligne de données (L) comporte au moins un nœud de stockage de données dans un premier état ou un deuxième code (B) si la ligne de données (L) est dépourvue de nœud de stockage de données dans le premier état,
- un deuxième de test de l'état des nœuds de stockage dans une ligne (L) de données, le deuxième test étant configuré pour envoyer un troisième code (C) si le nœud de stockage de données est dans le premier état ou un quatrième code (D) si le nœud de stockage de données est dans le deuxième état, le deuxième test étant configuré pour tester une ligne de données (L) lorsque le premier test a envoyé un premier code (A) relatif à ladite ligne de données (L),
- l'envoi du résultat du premier test à un récepteur (3) configuré pour contenir un signal représentatif de l'analyse de la matrice de données (M),
**caractérisé en ce que** :
- le premier test teste toutes les lignes de données (L) de la matrice de données (M) selon une séquence prédéfinie,
- le deuxième test est configuré pour tester consécutivement tous les nœuds de stockage de ladite ligne de données (L) et émettre un troisième code (C) ou un quatrième code (D) selon que le nœud de stockage analysé est ou non dans le premier état lorsque le premier test a envoyé un premier code (A) relatif à ladite ligne de données (L), le deuxième test étant configuré pour tester consécutivement tous les nœuds de stockage de ladite ligne de données (L) au moins jusqu'à l'occurrence d'un troisième code (C),
- l'envoi du résultat du premier test à un récepteur (3) qui reçoit le résultat du premier test (1) pour chacune des lignes de données (L) de la matrice de données et reçoit le résultat du deuxième test (2) pour tous les nœuds de stockage testés de manière à ce que le récepteur (3) contienne un signal qui comporte autant de premier et deuxième codes que de lignes de données (L) analysées, le signal comportant une succession de premier, deuxième, troisième et quatrième codes.

## Patentansprüche

1. Informationssuchschaltung in einer Datenmatrix (M), umfassend:
- die Datenmatrix (M), die in einer Vielzahl von Datenzeilen (L) organisiert ist, wobei jede Datenzeile (L) eine Vielzahl von Datenspeicherknoten umfasst, wobei jeder Datenspeicherknoten eingerichtet ist, um einen ersten Zustand oder einen zweiten Zustand zu speichern, wobei die Datenspeicherknoten mehrheitlich im zweiten Zustand sind,
- eine erste Schaltung (1), die einen ersten Test des Zustands einer Datenzeile (L) durchführt, wobei die erste Schaltung (1) eingerichtet ist, um zu bestimmen, ob die getestete Datenzeile (L) keinen Datenspeicherknoten im ersten Zustand hat, oder ob die getestete Datenzeile (L) mindestens einen Datenspeicherknoten im ersten Zustand umfasst, wobei die erste Schaltung (1) einen ersten Code (A) sendet, wenn die Datenzeile (L) mindestens einen Datenspeicherknoten in einem ersten Zustand umfasst, oder einen zweiten Code (B), wenn die Datenzeile (L) keinen Datenspeicherknoten im ersten Zustand umfasst,
- eine zweite Schaltung (2), die einen zweiten Test des Zustands der Knoten in einer Datenzeile (L) durchführt, wobei die zweite Schaltung (2) eingerichtet ist, um einen dritten Code (C) zu senden, wenn der Datenspeicherknoten im ersten Zustand ist, oder einen vierten Code (D), wenn der Datenspeicherknoten im zweiten Zustand ist, wobei die zweite Schaltung (2) eingerichtet ist, um eine Datenzeile (L) zu testen, wenn die erste Schaltung (1) einen ersten Code (A) im Zusammenhang mit der Datenzeile (L) gesandt hat,
- einen Empfänger (3), der eingerichtet ist, um ein Signal zu enthalten, das für die Analyse der Datenmatrix (M) repräsentativ ist,
**dadurch gekennzeichnet, dass**:
- die erste Schaltung (1) alle Datenzeilen (L) der Datenmatrix (M) gemäß einer vordefinierten Sequenz testet,
- die zweite Schaltung (2) eingerichtet ist, um nacheinander alle Speicherknoten der Datenzeile (L) zu testen und einen dritten Code (C) oder einen vierten Code (D) zu senden, je nachdem ob der analysierte Speicherknoten im ersten Zustand ist oder nicht, wenn die erste Schaltung (1) einen ersten Code (A) in Zusammenhang mit der Datenzeile (L) gesandt hat, wobei die zweite Schaltung (2) eingerichtet ist, um nacheinander alle Speicherknoten der Datenzeile (L) zumindest bis zum Aufscheinen eines dritten Codes (C) zu testen,
- der Empfänger (3) das Resultat von der ersten Testschaltung (1) für jede der Datenzeilen (L) der Datenmatrix empfängt, und das Resultat von der zweiten Testschaltung (2) für alle getesteten Speicherknoten empfängt, so dass der Empfänger (3) ein Signal enthält, das ebenso viele erste und zweite Codes wie analysierte Datenzeilen (L) umfasst, wobei das Signal eine Aufeinanderfolge von ersten, zweiten, dritten und vierten Codes umfasst.

2. Schaltung nach Anspruch 1, **dadurch gekennzeichnet, dass** der erste Code (A), der zweite Code (B), der dritte Code (C) und der vierte Code (D) auf ein Bit codiert sind.

3. Schaltung nach einem der Ansprüche 1 und 2, **dadurch gekennzeichnet, dass** die Datenmatrix (M) eine Matrix von Fotodetektoren ist, die einer Matrix von Leseschaltungen zugeordnet ist, wobei jede Leseschaltung einen Integrationsknoten der vom zugeordneten Fotodetektor gesandten Information umfasst, wobei der Integrationsknoten den Datenspeicherknoten bildet.

4. Schaltung nach Anspruch 3, **dadurch gekennzeichnet, dass** jede Datenzeile (L) der Datenmatrix (M) einer Zeile von Integrationsknoten der Matrix von Fotodetektoren entspricht, wobei die erste Schaltung (1) eingerichtet ist, um nacheinander Zeilen von Integrationsknoten der Matrix von Fotodetektoren zu testen und im Empfänger (3) einen ersten oder zweiten Code (A, B), der für jeden ersten Test repräsentativ ist, zu senden.

5. Schaltung nach Anspruch 3, **dadurch gekennzeichnet, dass** jede Datenzeile (L) der Datenmatrix (M) einer Vielzahl von Zeilen von Integrationsknoten der Matrix von Fotodetektoren entspricht, wobei die erste Testschaltung (1) eingerichtet ist, um nacheinander eine Vielzahl von Zeilen von Integrationsknoten der Matrix von Fotodetektoren zu testen und im Empfänger (3) einen ersten oder zweiten Code (A, B), der für jeden ersten Test repräsentativ ist, zu senden.

6. Schaltung nach einem der Ansprüche 4 und 5, **dadurch gekennzeichnet, dass** die zweite Schaltung (2) eingerichtet ist, um eine Datenzeile (L), die einem ersten Code (A) zugeordnet ist, zu testen, und das Resultat dieses zweiten Tests in den Empfänger (3) zu senden, bevor die erste Schaltung (1) den Test der folgenden Datenzeile (L) durchführt.

7. Schaltung nach einem der Ansprüche 4 bis 6, **dadurch gekennzeichnet, dass** die zweite Schaltung (2) eingerichtet ist, um alle Speicherknoten der Datenzeile (L) in einer ersten Testrichtung zu testen.

8. Schaltung nach einem der Ansprüche 4 bis 6, **dadurch gekennzeichnet, dass** die zweite Schaltung (2) eingerichtet ist, um alle Speicherknoten der Datenzeile (L) in einer ersten Testrichtung zu testen, bis ein Speicherknoten im ersten Zustand (A) getestet wird.

9. Schaltung nach einem der Ansprüche 1 bis 8, **dadurch gekennzeichnet, dass** die erste Schaltung (1) eine Polarisationsleitung, einen Datenbus, der für das Resultat des ersten Tests repräsentativ ist, eine Vielzahl von Schaltern, die parallel montiert und jeweils an die Polarisationsleitung und den Datenbus angeschlossen sind, umfasst, wobei die Steuerelektrode jedes Schalters an den zugeordneten Speicherknoten gekoppelt ist, um den Zustand des Schalters zu steuern.

10. Bewegliches Element, umfassend:
- eine Informationssuchschaltung nach einem der Ansprüche 3 bis 9,
- ein Antriebs- und/oder Drehsystem des beweglichen Elements,
- eine Rechenschaltung, die an den Empfänger (3) angeschlossen und eingerichtet ist, um die Position mindestens eines Pixels im ersten Zustand zu suchen, und um das Antriebs- und/oder Richtungssystem zu betätigen, um das mindestens eine Pixel in einer bevorzugten Position der Matrix von Fotodetektoren bei der nächsten Erfassungsphase anzunähern.

11. Informationssuchverfahren in einer Datenmatrix (M), umfassend:
- die Datenmatrix (M), die in einer Vielzahl von Datenzeilen (L) organisiert ist, wobei jede Datenzeile (L) eine Vielzahl von Datenspeicherknoten umfasst, wobei jeder Datenspeicherknoten eingerichtet ist, um einen ersten Zustand oder einen zweiten Zustand zu speichern, wobei die Datenspeicherknoten mehrheitlich im zweiten Zustand sind,
- einen ersten Test des Zustands einer Datenzeile (L), wobei der erste Test eingerichtet ist, um zu bestimmen, ob die getestete Datenzeile (L) keinen Datenspeicherknoten im ersten Zustand hat, oder ob die getestete Datenzeile (L) mindestens einen Datenspeicherknoten im ersten Zustand umfasst, wobei der erste Test einen ersten Code (A) sendet, wenn die Datenzeile (L) mindestens einen Datenspeicherknoten in einem ersten Zustand umfasst, oder einen zweiten Code (B), wenn die Datenzeile (L) keinen Datenspeicherknoten im ersten Zustand umfasst,
- einen zweiten Test des Zustands der Knoten in einer Datenzeile (L), wobei der zweite Test eingerichtet ist, um einen dritten Code (C) zu senden, wenn der Datenspeicherknoten im ersten Zustand ist, oder einen vierten Code (D), wenn der Datenspeicherknoten im zweiten Zustand ist, wobei der zweite Test eingerichtet ist, um eine Datenzeile (L) zu testen, wenn der erste Test einen ersten Code (A) im Zusammenhang mit der Datenzeile (L) gesandt hat,
- das Senden des Resultats des ersten Tests an einen Empfänger (3), der eingerichtet ist, um ein Signal zu enthalten, das für die Analyse der Datenmatrix (M) repräsentativ ist, **dadurch gekennzeichnet, dass**:
- der erste Test alle Datenzeilen (L) der Datenmatrix (M) gemäß einer vordefinierten Sequenz testet,
- der zweite Test eingerichtet ist, um nacheinander alle Speicherknoten der Datenzeile (L) zu testen und einen dritten Code (C) oder einen vierten Code (D) zu senden, je nachdem ob der analysierte Speicherknoten im ersten Zustand ist oder nicht, wenn der erste Test einen ersten Code (A) in Zusammenhang mit der Datenzeile (L) gesandt hat, wobei der zweite Test eingerichtet ist, um nacheinander alle Speicherknoten der Datenzeile (L) zumindest bis zum Aufscheinen eines dritten Codes (C) zu testen,
- das Senden des Resultats des ersten Tests an einen Empfänger (3), der das Resultat des ersten Tests (1) für jede der Datenzeilen (L) der Datenmatrix empfängt, und das Resultat des zweiten Tests(2) für alle getesteten Speicherknoten empfängt, so dass der Empfänger (3) ein Signal enthält, das ebenso viele erste und zweite Codes wie analysierte Datenzeilen (L) umfasst, wobei das Signal eine Aufeinanderfolge von ersten, zweiten, dritten und vierten Codes umfasst.

## Claims

1. Search circuit for a piece of information within a data matrix (M), comprising:
- the data matrix (M) arranged in a plurality of data lines (L), each data line (L) comprising a plurality of data storage nodes, each data storage node being configured so as to store a first state or a second state, the data storage nodes being mainly in the second state,
- a first circuit (1) performing a first test of the state of one data line (L), the first circuit (1) being configured so as to determine whether the tested data line (L) has no data storage node in the first state or whether the tested data line (L) has at least one data storage node in the first state, the first circuit (1) sending a first code (A) when the data line (L) has at least one data storage node in a first state or a second code when the data line (L) has no data storage node in the first state,
- a second circuit (2) performing a second test of the state of the data storage nodes in one data line (L), the second circuit (2) being configured so as to send a third code (C) when the data storage node is in the first state or a fourth code (D) when the data storage node is in the second state, the second circuit (2) being configured so as to test one data line (L) when the first circuit (1) has sent a first code (A) relative to said data line (L),
- a receiver (3) configured so as to contain a signal representative of the analysis of the data matrix (M),
**characterized in that**:
- the first circuit (1) tests all the data lines (L) of the data matrix (M) with a predefined sequence,
- the second circuit (2) is configured to consecutively test all the data storage nodes of said data line (L) and send a third code (C) or a fourth code depending on the data storage node is in the first state or not when the first circuit (1) has sent a first code (A) relating to said data line (L), the second circuit (2) being configured to test consecutively all the data storage nodes of said data line (L) at least until a third code (C) occurs,
- the receiver (3) receives the result from the first test circuit (1) for each data line (L) of the data matrix and receives the result from the second test circuit (2) for all tested data storage nodes so that the receiver (3) contains a signal comprising as many first and second codes (A, B) as tested data lines (L), the signal comprising a succession of first, second, third and fourth codes.

2. Circuit according to Claim 1, **characterized in that** the first code (A), the second code (B), the third code (C) and the fourth code (D) are encoded with one bit.

3. Circuit according to any one of the claims 1 and 2, **characterized in that** the data matrix (M) is a matrix of photodetectors associated with a matrix of readout circuits, each readout circuit includes an integration node for the piece of information emitted by the photodetector associated, the integration node forming the data storage node.

4. Circuit according to claim 3, **characterized in that** each data line (L) of the data matrix (M) corresponds to a line of integration nodes of the matrix of photodetectors, the first circuit (1) is configured to successively test the lines of integration nodes of the matrix of photodetectors and send, to the receiver (3), a first or second code (A, B) representative of each first test.

5. Circuit according to claim 3, **characterized in that** each data line (L) of the data matrix (M) corresponds to a plurality of lines of integration nodes of the matrix of photodetectors, the first test circuit (1) is configured to successively test a plurality of lines of integration nodes of the matrix of photodetectors and send, to the receiver (3), a first or second code (A, B) representative of each first test.

6. Circuit according to one of the claims 4 or 5, **characterized in that** the second circuit (2) is configured so as to test a data line (L) associated with a first code (A) and to send the result from this second test into the receiver (3) before the first circuit (1) tests the next data line (L).

7. Circuit according to to any one of the claims 4 to 6, **characterized in that** the second circuit (2) is configured to test all the data storage nodes of each data line (L) in a first test direction.

8. Circuit according to to any one of the claims 4 to 6, **characterized in that** the second circuit (2) is configured to test all the data storage nodes in the data line (L) in a first test direction until a data storage node in the first state (A) is tested.

9. Circuit according to any one of the claims 1 to 8, **characterized in that** the first circuit (1) comprises a bias line, a data bus representative of the first test, a plurality of switches connected in parallel and each connected to the bias line and the data bus, the control electrode for each switch being coupled to the data storage node associated so as to control the state of the switch.

10. Movable element comprising:
- a search circuit for a piece of information according to any one of the claims 3 to 9,
- a propulsion and/or rotation system for the movable element,
- a computing circuit connected to the receiver (3) and configured so as to search for the position of at least one pixel in the first state and to operate the propulsion and/or direction system so as to bring said at least one pixel closer to a preferential position of the matrix of photodetectors during the next acquisition step.

11. Search method for a piece of information within a data matrix (M) comprising:
- the data matrix (M) arranged in a plurality of data lines (L), each data line (L) comprising a plurality of data storage nodes, each data storage node being configured to store a first state or a second state, the data storage nodes being mainly in the second state,
- first test of the state of one data line (L), the first test being configured so as to determine whether the tested data line (L) has no data storage node in the first state or whether the tested data line (L) has at least one data storage node in the first state, the first test sending a first code (A) when the data line (L) has at least one data storage node in a first state or a second code when the data line (L) has no data storage node in the first state,
- a second test of the state of the data storage nodes in one data line (L), the second test being configured so as to send a third code (C) when the data storage node is in the first state or a fourth code (D) when the data storage node is in the second state, the second test being configured so as to test one data line (L) when the first circuit (1) has sent a first code (A) relative to said data line (L),
- sending the result of the first test to a receiver (3) configured to contain a signal representative of the analysis of the data matrix (M),
**characterized in that**:
- the first test tests all the data lines (L) of the data matrix (M) according to a predefined sequence,
- the second test is configured to consecutively test all the storage nodes of said data line (L) and send a third code (C) or a fourth code (D) depending on the analyzed storage node is in the first state or not when the first test has sent a first code (A) relating to said data line (L), the second test being configured to consecutively test all the storage nodes of said data line (L) at least up to a third code (C) occurs,
- sending the result of the first test to a receiver (3) which receives the result of the first test (1) for each of the data lines (L) of the data matrix and receives the result of the second test (2) for all the storage nodes tested so that the receiver (3) contains a signal which comprises as many first and second codes as data lines (L) analyzed, the signal comprising a succession of first, second, third and fourth codes.
